Europäisches Patentamt

European Patent Office

Office européen des brevets

(11) Veröffentlichungsnummer: **0 300 065 B1**

(12) **EUROPÄISCHE PATENTSCHRIFT**

(45) Veröffentlichungstag der Patentschrift: **02.09.92**

(21) Anmeldenummer: **87110427.9**

(22) Anmeldetag: **18.07.87**

(51) Int. Cl.⁵: **H01R 9/26**, H02B 1/04

(54) **Montagefuss zum Befestigen von elektrisch/elektronischen Bauelementen auf Tragschienen.**

(43) Veröffentlichungstag der Anmeldung:
**25.01.89 Patentblatt 89/04**

(45) Bekanntmachung des Hinweises auf die
Patenterteilung:
**02.09.92 Patentblatt 92/36**

(84) Benannte Vertragsstaaten:
**CH DE FR GB IT LI**

(56) Entgegenhaltungen:
**DE-A- 2 842 810**
**DE-C- 3 325 730**
**US-A- 4 113 982**

(73) Patentinhaber: **Weidmüller Interface GmbH &
Co.
Paderborner Strasse 175
W-4930 Detmold(DE)**

(72) Erfinder: **Holste, Dieter
Breidertring 1A
W-6074 Rödermark(DE)**

(74) Vertreter: **Stracke, Alexander, Dipl.-Ing. et al
Patentanwälte Dipl.-Ing. Loesenbeck
Dipl.-Ing. Stracke Jöllenbecker Strasse 164
Postfach 10 18 82
W-4800 Bielefeld 1(DE)**

## Beschreibung

Die Erfindung betrifft einen Montagefuß zum Befestigen von elektrischen und elektronischen Bauelementen auf Tragschienen, gemäß dem Oberbegriff des Anspruchs 1.

Für derartige Montagefüße besteht das Erfordernis, sich durch Auf- und Abrasten leicht auf der Tragschiene montieren zu lassen, und zwar unter Berücksichtigung der Tatsache, daß dies aus einer Anreihung nebeneinander angeordneter Montagefüße zu geschehen hat. Üblicherweise haben derartige Montagefüße neben einem relativ stabilen Widerlager für den einen Schenkel der Tragschiene ein relativ bewegliches Rastfederbein, das auf dem Ende des anderen Tragschienenschenkels federnd verrastet werden kann. Um dabei im Betriebszustand einen sicheren, festen Sitz des Montagefußes auf der Tragschiene zu gewährleisten, ist es bekannt, dem verrasteten Rastfederbein eine Verriegelung zuzuordnen, die nach Betätigung eine Blockierung des verrasteten Rastfederbeines bewirkt. Bei einem bekannten derartigen Montagefuß (Weidmüller Katalog Steckverbinder 1986/87, S 1/24) ist als Verriegelung eine Muttern-Schrauben-Kombination vorgesehen. Die Mutter ist in einer Ausnehmung des entsprechenden Abschnittes des Montagefußes gelagert und gehalten. Durch Drehen der durch eine Schraubendreheröffnung im Montagefuß zugänglichen Schraube, die gegen die Rückseite des Rastfederbeines wirkt, kann dieses gegenüber dem Montagefuß verspannt und blockiert werden. Die Verriegelung ist funktionsmäßig einwandfrei. Die Betätigung ist jedoch relativ umständlich. Es entstehen Mehrkosten für die Mutter und die Schraube und deren Montage im Montagefuß.

Der vorliegenden Erfindung liegt von daher die Aufgabe zugrunde, einen Montagefuß der gattungsgemäßen Art zu schaffen, der das Verriegeln des Rastfederbeines bei verringerten Herstellungskosten und vereinfachter Betätigung zuverlässig gewährleistet. Die erfindungsgemäße Lösung ergibt sich aus dem kennzeichnenden Teil des Patentanspruches 1.

Durch die schwenkbar an den Montagefuß im übrigen angeformte Verriegelungsstrebe kommen die Material- und Montagekosten von Schraube und Mutter in Fortfall, was eingedenk des Massenartikelcharakters derartiger Montagefüße zu einer beträchtlichen Verbilligung der Herstellung führt. Durch die Anformung der Verriegelungsstrebe wird der Montagefuß auch nicht etwa im Kunststoffbereich in der Herstellung teurer, da auch beim vorbekannten Montagefuß ein vergleichbarer Kunststoffbereich zur Halterung von Schraube und Mutter erforderlich war. Die Betätigung der Verriegelung ist ebenfalls außerordentlich vereinfacht. Anstelle der Betätigung der Schraube genügt nunmehr die Verschwenkung der angeformten Verriegelungsstrebe in ihre Blockierstellung. Zur Verdeutlichung des Ausmaßes der Vereinfachung ist darauf zu verweisen, daß üblicherweise in Schaltanlagen und dergleichen eine Vielzahl derartiger Montagefüße nebeneinander auf Tragschienen aneinander angereiht sind. Von Vorteil ist auch, daß bei einer derartigen Anreihung von Montagefüßen dadurch, daß die in die Blockierstellung verschwenkte Verriegelungsstrebe eine deutlich andere Raumlage hat als eine unverschwenkte Verriegelungsstrebe, die Tatsache der Verriegelung bzw. Nichtverriegelung optisch ins Auge fällt und man in einer derartigen Anreihung sofort sieht, wo möglicherweise das Verriegeln vergessen worden ist. Bei den hier bislang vorgesehenen Schrauben war eine derartige optische Kontrolle aufgrund ihrer versteckten Lage im Montagefuß praktisch nicht möglich. Weitere bevorzugte Ausgestaltungen sind in den Unteransprüchen gekennzeichnet. Sie tragen zum einfachen konstruktiven Aufbau und zur erleichterten Handhabung der Verriegelung bei. Besonders zweckmäßig ist eine Ausgestaltung, bei der die Verriegelungsstrebe mittels eines Filmscharnieres an dem Montagefuß angelenkt ist. Dabei ist auf der Rückseite des Rastfederbeines eine Rastaufnahme für eine Endkante der Verriegelungsstrebe vorgesehen. Durch das Filmscharnier ist die Verriegelungsstrebe zuverlässig unverlierbar am Montagefuß gehalten. Man kann dabei zugleich beim Verschwenken der Verriegelungsstrebe in ihre Blockierstellung der das Filmscharnier bildenden Materialzone eine solche Verformung und damit Vorspannung geben, daß diese die Verriegelungsstrebe dann ohne weitere Hilfsmaßnahmen zuverlässig in der Rastaufnahme hält, in die die eine Endkante der Verriegelungsstrebe dann am Ende des Verschwenkvorganges in der Blockierstellung einschnappt.

Ein Ausführungsbeispiel eines erfindungsgemäßen Montagefußes wird nachstehend unter Bezugnahme auf die Zeichnung näher beschrieben. Es zeigen

Figur 1      einen Montagefuß gemäß der Erfindung in Seitenansicht, aufgerastet auf eine Tragschiene, jedoch mit ungetätigter Verriegelung,

Figur 2      den Montagefuß nach Figur 1, nunmehr mit getätigter Verriegelung des verrasteten Rastfederbeines.

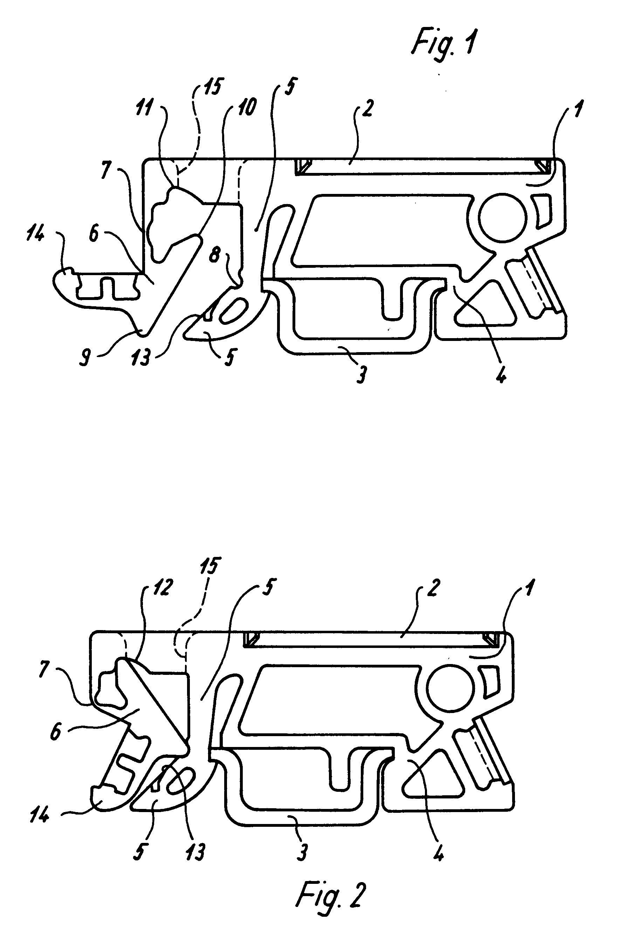

Der in den Figuren 1 und 2 dargestellte, aus Kunststoff bestehende Montagefuß 1 hat oberseitig eine Aufnahme 2 zur Festsetzung der auf einer Tragschiene 3 mit Hilfe dieses Montagefußes zu setzenden elektrischen oder elektronischen Bauelemente (nicht dargestellt). Der Montagefuß 1 hat zur Verrastung mit der Tragschiene 3 eine relativ steife und starre Fußzone 4, die den einen Schenkel der Tragschiene 3 nach der Montage übergreift. Die Festlegung am anderen Schenkel der Tragschiene 3 geschieht mittels eines in bestimmten Grenzen elastisch verformbaren Rastfederbeines 5, das nach dem Ausrasten des Montagefußes auf die Tragschiene 3 das Ende des entsprechenden Tragschienenschenkels schnappend hintergreift, wie aus den Figuren 1 und 2 ersichtlich. Dank dieses grundsätzlichen Aufbaus kann ein derartiger Montagefuß 1 leicht durch Auf- und Abrasten auf eine Tragschiene 3 montiert und auch wieder von ihr abgenommen werden, auch aus einer Anreihung zahlreicher derartiger Montagefüße nebeneinander auf einer solchen Tragschiene.

Um dem Montagefuß 1 nach dem Aufrasten auf die Tragschiene 3 auf dieser einen sicheren, stabilen Sitz zu geben, ist eine Verriegelung für das verrastete Rastfederbein 5 vorgesehen. Hierzu ist nun an den Montagefuß 1 eine Verriegelungsstrebe 6 schwenkbar angeformt, und zwar derart, daß sie in eine Blockierstellung (siehe Figur 2) hinter das verrastete Rastfederbein 5 geschwenkt werden kann. Im dargestellten Ausführungsbeispiel ist die Verriegelungsstrebe 6 auf ihrer Rückseite mittels einem Filmscharnier 7 unverlierbar schwenkbar an den Montagefuß 1 im übrigen angelenkt. Ferner ist auf der Rückseite des Rastfederbeines 7 in dieses, dem mit dem Tragschienenschenkel zusammenwirkenden Bereich gegenüberliegend, eine Rastausnehmung 8 eingeformt, in der die entsprechende Endkante 9 der Verriegelungsstrebe 6 schnappend verrastet werden kann, wie aus Figur 2 ersichtlich.

Beim Verschwenken der Verriegelungsstrebe 6 von der Offenstellung (Figur 1) in die Blockierstellung (Figur 2) erhält das Material des Filmscharnieres 7 eine solche Verformung und damit Vorspannung, daß dies ausreicht, die Verriegelungsstrebe 6 in der Blockierstellung hinter dem Rastfederbein 5 zu halten. Um jedoch gegebenenfalls auch hohen Belastungen standhalten zu können und damit dem Montagefuß einen besonders sicheren Halt auf der Tragschiene zu geben, ist zweckmäßig für die andere Endkante 10 der Verriegelungsstrebe 6 an einer der Blockierstellung der Verriegelungsstrebe 6 entsprechenden Stelle eine Abstützschulter 11 eingeformt, an der diese Endkante 10 bei entsprechend hohen Belastungen und daraus resultierenden Verformungen ein Gegenlager findet. Eine entsprechende Freischneidung 12 ermöglicht das Erreichen der Abstützschulter 11 während der Schwenkbewegung.

Zur Vereinfachung der Betätigung der Verriegelung ist zweckmäßig an das untere Ende des Rastfederbeines 5 auf dessen Rückseite eine zur Rastaufnahme 8 hinführende Führungsfläche 13 für die Endkante 9 der Verriegelungsstrebe 6 bei deren Verschwenkbewegung gebildet. In weiterer zweckmäßiger Ausgestaltung ist an die Rückseite der Verriegelungsstrebe 6 noch eine Betätigungsleiste 14 angeformt, mit deren Hilfe man mit dem Finger die Verschwenkung der Verriegelungsstrebe 6 in die Blockierstellung bequem durchführen kann. Die vergleichende Anschauung der Figuren 1 und 2 zeigt auch die Veränderung der Raumlage der Verriegelungsstrebe 6, insbesondere der Betätigungsleiste 14 durch den Verriegelungsvorgang. Es ist somit jederzeit optisch leicht zu sehen, ob die Verriegelung betätigt wurde oder nicht.

Es ist schließlich in dem Montagefuß 1 oberhalb der Verriegelungslasche 6 eine Stecköffnung 15 vorgesehen, durch die hindurch man mit einem stabförmigen Werkzeug problemlos die Verriegelungslasche 6 aus ihrer in Figur 2 dargestellten Blockierstellung wieder herausdrücken kann.

**Patentansprüche**

1. Montagefuß zum Befestigen von elektrischen oder elektronischen Bauelementen auf Tragschienen (3), mit einer starren, einen der Tragschienenschenkel übergreifenden Fußzone (4), einem Rastfederbein (5) zum Verrasten auf dem anderen Tragschienenschenkel und einer auf die dem Tragschienenschenkel abgewandte Rückseite des verrasteten Rastfederbeines (5) wirkenden Verriegelung, **dadurch gekennzeichnet,** daß die Verriegelung durch eine in eine Blockierstellung hinter das verrastete Rastfederbein (5) schwenkbar an dem Montagefuß (1) angeformte Verriegelungsstrebe (6) gebildet ist.

2. Montagefuß nach Anspruch 1, dadurch gekennzeichnet, daß auf der Rückseite des Rastfederbeines (5) eine Rastaufnahme (8) für eine Endkante (9) der Verriegelungsstrebe (6) vorgesehen ist und die Verriegelungsstrebe (6) mittels eines Filmscharnieres (7) an dem Montagefuß (1) angelenkt ist.

3. Montagefuß nach Anspruch 1 oder 2, dadurch gekennzeichnet, daß für die an dem Rastfederbein (5) in der Blockierstellung abgewandt liegende Endkante (10) der Verriegelungsstrebe (6) im Montagefuß (1) eine Abstützschulter (11) gebildet ist.

4. Montagefuß nach einem oder mehreren der vorhergehenden Ansprüche, dadurch gekennzeichnet, daß auf der Rückseite des Rastfederbeines (5) eine zu der Rastaufnahme (8) führende Führungsfläche (13) für die Endkante (9) der Verriegelungsstrebe (6) gebildet ist.

5. Montagefuß nach einem oder mehreren der vorhergehenden Ansprüche, dadurch gekennzeichnet, daß auf der Rückseite der Verriegelungsstrebe (6) eine Betätigungsleiste (14) angeformt ist.

## Claims

1. A mounting base for fixing electrical or electronic components on support rails (3), comprising a rigid base zone (4) which engages over one of the support rail limbs, a retaining spring leg (5) for latching on the other support rail limb and a locking means which acts on the rear, which is remote from the support rail limb, of the latched retaining spring leg (5), characterised in that the locking means is formed by a locking strut (6) which is formed on the mounting base (1) pivotably into a blocking position behind the latched retaining spring leg (5).

2. A mounting base according to claim 1 characterised in that a retaining receiving means (8) for an end edge (9) of the locking strut (6) is provided on the rear of the retaining spring leg (5) and the locking strut (6) is pivotally connected to the mounting base (1) by means of a film hinge (7).

3. A mounting base according to claim 1 or claim 2 characterised in that a support shoulder (11) is formed in the mounting base (1) for the end edge (10) of the locking strut (6), which end edge is remote from the retaining spring leg (5) in the blocking position.

4. A mounting base according to one or more of the preceding claims characterised in that formed on the rear of the retaining spring leg (5) is a guide surface (13), which leads to the retaining receiving means (8), for the end edge (9) of the locking strut (6).

5. A mounting base according to one or more of the preceding claims characterised in that an actuating strip (14) is formed on the rear of the locking strut (6).

## Revendications

1. Pied de montage pour la fixation de composants électriques ou électroniques sur des rails de support (3), comportant une zone de pied (4) rigide, passant sur les ailes des rails de support, comportant une jambe de force d'encliquetage (5) en vue de l'encliquetage sur l'autre aile du rail de support ainsi qu'un verrouillage agissant sur le côté arrière, opposé à l'aile du rail de support, de la jambe de force (5) encliquetée, caractérisé en ce que le verrouillage est constitué par une entretoise de verrouillage (6) formée sur le pied de montage (1), pivotant dans une position de blocage derrière la jambe de force (5) encliquetée.

2. Pied de montage selon la revendication 1, caractérisé en ce qu'il est prévu sur le côté arrière de la jambe de force d'encliquetage (5), un logement d'encliquetage (8) pour un bord terminal (9) de l'entretoise de verrouillage (6) et en ce que l'entretoise de verrouillage (6) s'articule sur le pied de montage (1), au moyen d'une charnière-film (7).

3. Pied de montage selon la revendication 1 ou 2, caractérisé en ce qu'il est formé dans le pied de montage (1), un épaulement d'appui (11) pour le bord terminal (10), opposé à la jambe de force d'encliquetage (5) en position de blocage, de l'entretoise de verrouillage (6).

4. Pied de montage selon une ou plusieurs des revendications précédentes, caractérisé en ce qu'il est formé, sur le côté arrière de la jambe de force d'encliquetage (5), une surface de guidage (13) menant au logement d'encliquetage (8), pour le bord terminal (9) de l'entretoise de verrouillage (6).

5. Pied de montage selon une ou plusieurs des revendications précédentes, caractérisé en ce qu'il est formé une baguette d'actionnement (14) sur le côté arrière de l'entretoise de verrouillage (6).

Fig. 1

Fig. 2